# EUROPÄISCHE PATENTSCHRIFT

(11) **EP 2 480 773 B1**
(45) Veröffentlichungstag und Bekanntmachung des Hinweises auf die Patenterteilung: **31.12.2014**
(21) Anmeldenummer: 10760302.9
(22) Anmeldetag: 23.09.2010
(51) Int. Cl.: F02C 7/228, F02C 7/232

(54) **BRENNSTOFFLEITUNGSSYSTEM, VERFAHREN ZUM BETRIEB EINER GASTURBINE UND EIN VERFAHREN ZUM SPÜLEN DES BRENNSTOFFLEITUNGSSYSTEMS EINER GASTURBINE**
FUEL LINE SYSTEM, METHOD FOR OPERATING A GAS TURBINE, AND METHOD FOR PURGING THE FUEL LINE SYSTEM OF A GAS TURBINE
SYSTÈME DE TUYAUTAGE À COMBUSTIBLE, PROCÉDÉ DE FONCTIONNEMENT D'UNE TURBINE À GAZ ET PROCÉDÉ DE BALAYAGE DU SYSTÈME DE TUYAUTAGE À COMBUSTIBLE D'UNE TURBINE À GAZ

(30) Priorität: 24.09.2009 EP 09012167
(43) Veröffentlichungstag der Anmeldung: 01.08.2012
(73) Patentinhaber: Siemens Aktiengesellschaft, 80333 München (DE)
(72) Erfinder: HASE, Matthias, 45478 Mülheim (DE); MAYR, Axel, 10439 Berlin (DE); MEISL, Jürgen, 45478 Mülheim an der Ruhr (DE)
(86) Internationale Anmeldenummer: PCT/EP2010/064047
(87) Internationale Veröffentlichungsnummer: WO 2011/036205

(56) Entgegenhaltungen:
- EP-A1- 1 475 569
- EP-A2- 1 199 454
- DE-A1-102008 044 447
- GB-A- 2 378 224
- US-A- 5 881 550

## Beschreibung

Die Erfindung betrifft ein Brennstoffleitungssystem für eine Gasturbine, ein Verfahren zum Betrieb einer Gasturbine und ein Verfahren zum Spülen des Brennstoffleitungssystems einer Gasturbine.

Brennstoffleitungssysteme verbinden als Gasturbinen-Hilfssysteme einen Brennstofftank oder ein Brennstoffversorgungsnetz mit den Brennern der Gasturbine mit Hilfe einer Vielzahl von Leitungen und Leitungsabschnitten, in den unterschiedliche Bauelemente zur Säuberung des Brennstoffs, zur Messung der Eigenschaften des Brennstoffs, zur Einstellung des Drucks des Brennstoffs und zur Einstellung der im Betrieb der Gasturbine benötigten Brennstoffmenge vorgesehen sind.

Ein derartiges Brennstoffleitungssystem ist beispielsweise aus der US 4,817,389 bekannt. Die darin offenbarte Gasturbine weist eine Vielzahl von auf einen Kreis verteilten Brennstoffdüsen zur Einspritzung von Brennstoff in die Gasturbinen-Brennkammer auf. Die Mehrzahl der Brennstoffdüsen sind Hauptbrenner. Zwei der Brennstoffdüsen sind Pilotbrenner, die in einem tiefer gelegenen Bereich angeordnet sind als die Hauptbrenner. Eine Versorgungsleitung mit einer Brennstoffpumpe verbindet den Brennstoff-Tank mit einer Brennstoffregelung. Von dort aus erstreckt sich die Versorgungsleitung weiter zu einem Druckregelventil, welches mittels zweier Ausgänge den Brennstoff über weitere Brennstoffleitungen und Brennstoffverteiler den Brennern zuführt. Die Brennstoffregelung stellt den Brennstofffluss zu den Brennern ein. Üblicherweise wird ein minimaler Fluss zu den Hauptbrennern und eine geringfügige Modulation des Brennstoffflusses zu den Pilotbrennern eingestellt.

Um in der Brennkammer unterschiedlich heiße Heißgassträhnen zu vermeiden und somit entlang des Umfangs eine gleichmäßige Temperatur im Heißgas zu erhalten, schlägt die US 4,817,389 vor, ein Druckregelventil in den zu den Hauptbrennern geführten Leitungen vorzusehen. Durch das Druckregelventil wird insbesondere während des Hochfahrens der Gasturbine und im Falle von einer schnellen Drehzahlreduzierung der Brennstoffmassenstrom zwischen den einzelnen Brennergruppen günstig umverteilt, was eine ungleichmäßige Temperaturverteilung in der Brennkammer vermeidet. Nachteilig ist dabei, dass die Konfiguration dabei auf eine Vielzahl von Hauptbrennern abzielt, die oberhalb der in der Ringbrennkammer angeordneten Pilotbrenner vorgesehen sind.

Eine Anwendung in Gasturbinen mit einer anderen Brenner- oder Brennkammerkonfiguration erscheint damit nur schwer möglich zu sein.

Daneben ist aus der EP 1 199 454 A2 ein Dual-Fuel-Brennstoffsystem für eine Gasturbine bekannt, bei dem die den Brennern zugeführten Brennstoffe mit Hilfe von Regelventilen einstellbar ist. Weiter ist aus der DE 10 2008 044447 A1 bekannt, die Regelventile eines Brennstoffversorgungssystems einer Gasturbine selektiv zu betreiben, um eine zuverlässige und emissionsarme Verbrennung zu erreichen. Derartige Brennstoffversorgungssysteme sich jedoch vergleichsweise aufwendig.

Die Verwendung von Pilot- und Hauptbrennern geht beispielsweise aus der EP 1 475 569 A1 hervor, wobei diese in unterschiedlichen Gruppen über entsprechende Regelventile angesteuert werden können. Ein Spülverfahren für ein Brennstoffversorgungssystem einer Gasturbine ist zudem aus der US 5,881,550 bekannt.

Weiter sind mit Ölbrennstoff betriebene Pilotbrenner in Gasturbinen bekannt. Für die betreffende Pilotstufe ist zumindest ein passives Regelelement, beispielsweise ein federgesteuertes Rückschlagventil zur Rückströmvermeidung vorgesehen. Auch ist bekannt, anstelle des Rückschlagventils ein aktiv geregeltes Regelventil zu verwenden, um zusätzlich den Brennstoff-Massenstrom einstellen zu können. Eine aktiv geregelte zweite Stufe ist in der Regel jedoch mit hohen Kosten für das zusätzliche Rohrleitungs- und Regelsystem verbunden, während dem passiven Regelelement die Flexibilität während des Gasturbinenbetriebs fehlt.

Zudem muss bei der Verwendung eines Rückschlagventils im Brennstoffleitungssystems unmittelbar stromauf des Brenners das Spülwasser, welches nach dem Gasturbinenbetrieb das in den Brennern und dessen Anschlussleitungen vorhandene Öl verdrängt, den Gegendruck des Rückschlagventils überwinden, damit das Spülwasser tatsächlich auch die Brenner von Ölrückständen befreit. Dies führt dazu, dass gerade bei geringen Brennkammerdrücken hohe Spülwassermassenströme auftreten, die die Lebenszeit der stromab des Brenners liegenden Komponenten wie Brennkammerwand und Turbinenschaufeln verkürzen.

Der Erfindung liegt daher die Aufgabe zugrunde, ein Brennstoffleitungssystem für eine Gasturbine und ein Verfahren zum Spülen derselbigen anzugeben, welches eine Spülung des Leitungssystems mit einer vergleichsweise geringen Menge an Spülmedium ermöglicht. Weitere Aufgabe ist es, eine Gasturbine anzugeben, deren stromab des Brenners angeordnete Bauteile aufgrund des Spülens des Brenners und der ihm oder ihr zugeordneten Brennstoffleitung eine verlängerte Lebensdauer aufweisen.

Die auf das Brennstoffleitungssystem gerichtete Aufgabe wird mit einem System gemäß den Merkmalen des Anspruchs 1 gelöst. Die auf die Gasturbine gerichtete Aufgabe wird mit einer solchen gelöst, welche gemäß den Merkmalen des Anspruchs 4 ausgestaltet ist. Ferner wird die auf das Verfahren zum Spülen eines Brennstoffleitungssystems gerichtete Aufgabe mit den Merkmalen des Anspruchs 7 gelöst.

Allen Lösungen ist gemein, dass in zumindest einer Brennstoffleitung, welche Brennstoff von dem Verteiler oder von mehreren Verteilern zu einer Anzahl von Einspritzdüsen weiterleitet, ein Regelventil mit einstellbarer Regelcharakteristik angeordnet ist. Die Lösung geht von der Erkenntnis aus, dass das passive Regelungselement, welches bisher als Rückschlagventil ausgebildet war, mittels weiterer Elemente so ertüchtigt werden kann, dass eine Anpassung des Regelverhaltens möglicht wird. Die Anpassung kann dabei während des Gasturbinenbetriebs, worunter die Befeuerung der Gasturbine verstanden wird, oder auch danach erfolgen. Als weiteres Element zur Anpassung des Regelverhaltens ist vorzugsweise ein weiterer Anschluss für das passive Regelungselement vorgesehen, über welchen die Regelcharakteristik des Regelventils anpassbar bzw. einstellbar ist. An dem Anschluss ist eine Steuerleitung angeschlossen, über welche ein gasförmiges oder flüssiges Steuermedium dem Regelventil zur Beeinflussung der Regelcharakteristik zuführbar ist. Der Druck des Steuermediums kann dabei während des Gasturbinen-Betriebs oder danach angepasst werden, wodurch sich die Regelcharakteristik des Regelventils einstellen lässt. Eine solche Anpassung ist vorzugsweise während oder kurz vor dem Spülen sinnvoll. Im Betrieb der Gasturbine ist der Gegendruck im am Regelventil anstehenden Steuermedium eher vergleichsweise groß.

Durch die Verwendung des erfindungsgemäßen Regelventils in einem Brennstoffleitungssystem einer Gasturbine kann der Brennstofftransfer zu den Einspritzdüsen bei unterschiedlichen Brennstoff-Versorgungsdrücken durch die Anpassung des Gegendrucks in den Regelventilen erfolgen. Bevorzugt kann das System auch für zum Betrieb mit flüssigem Brennstoff ausgestaltete Brenner mit mehr als ein oder zwei Pilotstufen verwendet werden. Generell ist das System für mehrstufige Brenner, gleichgültig, ob sie im Gas- oder Ölbetrieb betrieben werden, verwendbar.

Durch das Einstellen der Regelcharakteristik während des Betriebs der Gasturbine in Abhängigkeit von der Gasturbinenleistung kann der Brennstoff optimal für die momentane, von der Gasturbine zu erbringende Last in die entsprechenden Verbrennungszonen verteilt werden. Dieses Verfahren ist insbesondere vorteilhaft für eine als Ölpilotdüse ausgestaltete Einspritzdüse mit zwei Drallkammern, die den Brennstoff an unterschiedlichen Stellen in die Brennkammer der Gasturbine eindüsen. Auch für eine Ölpilotdüse mit nur einer Drallkammer kann dieses Vorgehen vorteilhaft sein.

Die erfindungsgemäße Vorrichtung ermöglicht auch die komplette Entspannung des Regelventils mit einstellbarer Regelcharakteristik für einen Spülvorgang der entsprechenden Brennstoffleitung und der daran stromab angeschlossenen Einspritzdüse. Nach dem Abschalten der betroffenen Brennerleitung wird für den Spülvorgang der Gegendruck im Steuermedium auf einen vergleichsweise geringen Wert oder gar auf Null reduziert. Damit reicht ein - in Bezug zu bisherigen Spülverfahren - kleinerer, jedoch - in Bezug auf den Gegendruck - geringfügig höherer Versorgungsdruck im Spülmedium, um zum Spülen der Leitung und der Einspritzdüse dass Regelventil mit einstellbarer Regelcharakteristik zu öffnen. Hierdurch ist es möglich, mit einem vergleichsweise kleinen Spülmedium-Massenstrom zu spülen.

Mit anderen Worten: Mit dem erfindungsgemäßen Brennstoffleitungssystem ist nun ein Spülverfahren möglich, bei dem nach Abschalten der Brennstoffförderung durch das Brennstoffleitungssystem der entsprechenden Brennerstufe das Spülmedium von einer Spülmediumquelle über eine in die betreffende Brennstoffleitung mündende Spülmedium-Einspeiseleitung zu den Einspritzdüsen mit einem vergleichsweise geringen Versorgungsdruck gefördert wird, und bei dem das Regelventil mit Hilfe eines in Bezug auf den Spülmedium-Versorgungsdruck geringeren Gegendrucks im Steuermedium so eingestellt ist, dass dieses sich bei vergleichsweise geringem Versorgungsdruck am Regelventileingang öffnet. Folglich kann damit der im Stand der Technik bisher eingesetzte höhere Spülmediummassenstrom reduziert werden bei gleichbleibender Spülleistung, was die Belastung der der Einspritzdüse bzw. dem Brenner nachgeordneten Bauteile durch Spülmedium reduziert. Da weniger Spülmedium in die Brennkammer und in die Turbine eingespritzt wird, erleiden diese Bauteile eine geringere Thermoschock-Belastung nach dem Abschalten der Brennstoffförderung. Dies verlängert die Lebensdauer der betreffenden Bauteile.

Weiter ist das Regelventil nach Art eines konventionellen Rückschlagventils mit einem Eingangsanschluss und einem Ausgangsanschluss ausgebildet, welches anstelle oder zusätzlich zur Feder des Rückschlagventils einen Steueranschluss für das Steuermedium aufweist, an dem zum Öffnen des Regelventils ein vom Eingangsdruck zu überwindender Gegendruck anstehbar ist. Je nach Größe des Gegendrucks öffnet das Regelventil entweder, wenn der Druck am Eingangsanschluss des Regelventils größer wird als die von der Feder des Rückschlagventils vorgegebene Gegenkraft, sofern eine Feder vorhanden ist, oder das Regelventil öffnet erst dann, wenn der Druck am Eingangsanschluss einen Gegendruck im Steuermedium überwindet. Vorzugsweise müssen ein Gegendruck und eine Federkraft gleichzeitig überwunden werden.

Aus Symmetriegründen sind im Brennstoffleitungssystem einer Gasturbine mehrere Regelventile angeordnet, deren Steuerleitung von einer gemeinsamen Steuerzuleitung zur gleichzeitigen Ansteuerung abzweigen. Dabei ist in der Steuerzuleitung ein weiteres Regelventil zur Einstellung des Drucks im Steuermedium vorgesehen. Die Einspritzdüsen können dabei als zumindest eine Brennerstufe in einem oder mehreren Brennern ausgebildet sein.

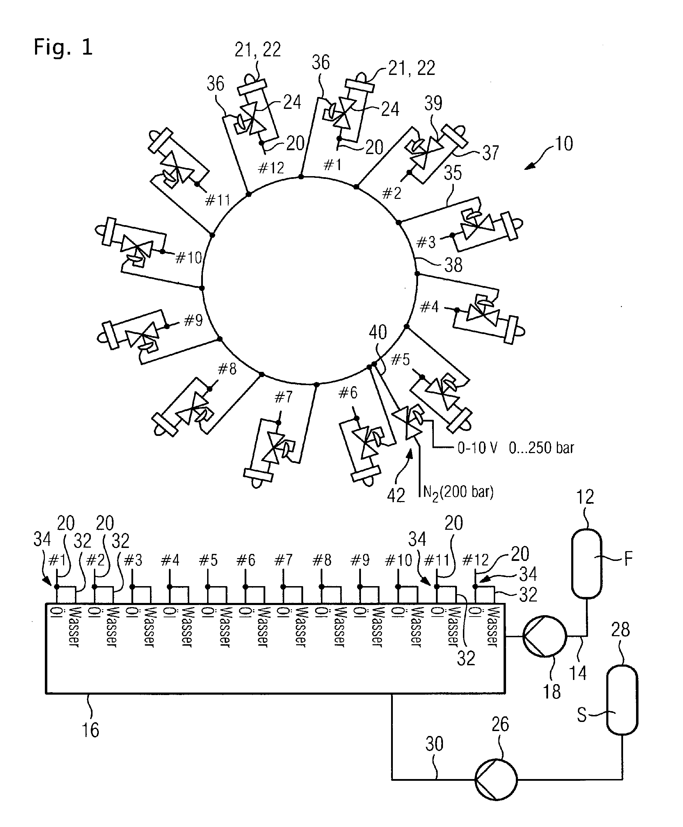

Die weitere Erläuterung der Erfindung erfolgt anhand des in der Zeichnung dargestellten Ausführungsbeispiels. Die einzige Figur zeigt ein Regelungssystem für eine zweistufige Pilotöldüse einer Gasturbine.

Die einzige Figur zeigt schematisch ein Brennstoffleitungssystem 10 für eine Gasturbine. Das Brennstoffleitungssystem 10 ist einspeiseseitig an eine Brennstoffquelle 12, welche beispielsweise als Tank ausgebildet sein kann, angeschlossen und umfasst eine Brennstoffzuleitung 14, die die Brennstoffquelle 12 mit einem Verteiler 16 verbindet. In der Zuleitung 14 ist gleichfalls eine Pumpe 18 zum Fördern von flüssigem oder gasförmigem Brennstoff F vorgesehen. Vom Verteiler 16 verzweigt eine Vielzahl von Brennstoffleitungen 20 ab, die - wie weiter unten detailliert erläutert werden wird - an Einspritzdüsen 21 der Gasturbine enden. Die Einspritzdüsen 21 sind dabei jeweils Teile eines konventionellen Gasturbinen-Brenners 22. Die Brenner 22 können zumindest eine Stufe aufweisen, beispielsweise eine Pilotstufe oder eine Hauptstufe. Gleichfalls ist es möglich, dass die Brenner 22 sowohl Pilot- als auch Hauptstufen aufweisen. Weiter ist dabei möglich, dass die Brenner 22 zumindest eine Pilotstufe oder zumindest eine Hauptstufe aufweisen, die jeweils mindestens zwei Einspritzdüsen 21 und zwei Drallkammern umfassen, so dass sowohl Pilotdüse als auch Hauptdüse als mehrstufig bezeichnet werden können.

Im dargestellten Ausführungsbeispiel sind insgesamt zwölf Brenner 22 für die Gasturbine vorgesehen. Daher zweigen vom Verteiler 16 auch zwölf Brennstoffleitungen 20 ab, welche den Verteiler 16 mit den zwölf Einspritzdüsen 21 einzeln verbinden. Die einzelnen Verbindungen sind jedoch aus Übersichtsgründen nicht in Linienart dargestellt, sondern über Zuordnungsnummern #1 bis #12 hier nur logisch verknüpft: Die vom Verteiler 16 abzweigenden Brennstoffleitungen 20, Nr. #1 bis #12 sind mit den weiter oben dargestellten Brennstoffleitungen 20 mit entsprechender Nummerierung jeweils einzeln verbunden.

Des weiterem ist dem Verteiler 16 über eine Spülmediumzuleitung 30 mit Hilfe einer darin vorgesehenen weiteren Pumpe 26 ein Spülmedium S, beispielsweise Wasser, von einer Spülmediumquelle 28 zuführbar. Selbstverständlich kann hierfür auch ein weiterer, vom Verteiler 16 getrennter Verteiler vorgesehen sein. Ferner weist der Verteiler 16 zwölf Spülmediumausgänge 32 auf. Diese münden jeweils an einem Einspeisepunkt 34 in einer der Brennstoffleitungen 20. Bei den dargestellten Brennern 22 handelt es sich beispielsweise um Pilotbrenner, die zweistufig und somit im Detail mit zwei Brennstoffeingängen 37, 39 ausgestattet sind. Einer (37) der beiden Brennstoffeingänge 37, 39 der Brenner 22 ist unmittelbar - d.h. ohne die Zwischenschaltung eines Regelventils 24 mit einstellbarer Regelcharakteristik - mit dem Verteiler 16 verbunden, wohingegen der andere (39) der beiden Brennstoffeingänge 37, 39 der Brenner 22 über ein erfindungsgemäßes Regelventil 24 mit dem Verteiler 16 verbunden ist.

Alle in den Brennstoffleitungen 20 angeordneten Regelventile 24 weisen jeweils einen Steueranschluss 36 auf, welcher über eine Steuerleitung 35 an eine Ringleitung 38 angeschlossen ist. Die Ringleitung 38 ist über eine Steuerzuleitung 40 mit einer nicht dargestellten Steuermedium-Quelle verbunden. In der Steuerzuleitung 40 ist ein weiteres Regelventil 42 vorgesehen, mit dem der Druck in der Ringleitung 38 und somit an den Steueranschlüssen 36 der jeweiligen Regelventile 24 mit einstellbarer Regelcharakteristik eingestellt werden kann.

Als Steuermedium kann beispielsweise Stickstoff oder ein anderes geeignetes gasförmiges oder flüssiges Steuermedium vorgesehen sein. Über die Steuerzuleitung 40 und die Ringleitung 38 kann ein Gegendruck in den Regelventilen 24 während des Betriebs der Gasturbine und auch danach für den Spülvorgang eingestellt werden. Dadurch lässt sich die Regelcharakteristik der Regelventile 24 ändern. Die Einstellung des Gegendrucks in den Regelventilen 24 schließt auch die Absenkung auf den Umgebungsdrucks ein, welches das Öffnen des Regelventils 24 schon bei sehr geringem Versorgungsdrücken in der Brennstoffleitung 20 ermöglicht. Dieses erfolgt bevorzugt nach dem Abschalten der betreffenden Brennstoffförderung, um mit Hilfe des Spülmediums die Brennstoffleitungen 20 von Brennstoff zu befreien, was das Verkoken von Brennstoffleitungen 20 verhindert.

Über die unmittelbar an die Brennstoffleitungen 20 angeschlossenen Brennstoffeingänge 37 kann eine Mindestbrennstoffmenge in die Brennkammer eingedüst werden. Über die dazu parallelen Brennstoffeingänge 39 kann während des Betriebs der Gasturbine die zugeführte Brennstoffmenge vergrößert werden, indem der Gegendruck im Steuermedium auf eine Größe unterhalb des eingangsseitig am Regelventil 24 anstehenden Brennstoffdrucks abgesenkt wird, was die Verbrennung positiv beeinflussen kann.

Insgesamt wird mit der Erfindung ein Brennstoffleitungssystem 10 für eine Gasturbine und ein Verfahren zum Spülen dessen angegeben, welches eine Spülung von Teilen des Leitungssystems 10 mit einer vergleichsweise geringen Menge an Spülmedium S ermöglicht. Hierzu ist vorgesehen, dass in den unmittelbar stromauf der Brennstoff-Einspritzdüsen 21 vorhandenen Brennstoff-Leitungsabschnitten 20 jeweils ein Regelventil 24 vorgesehen ist, dessen Regelcharakteristik mit Hilfe eines fluiden Steuermediums einstellbar ist.

Die Zahlenwerte in der Figur sind nur vorzugsweise verwendete Parameter.

## Patentansprüche

1. Brennstoffleitungssystem (10) für eine Gasturbine, umfassend:
• zumindest eine Brennstoffzuleitung (14) zum Zuführen und Fördern von flüssigem oder gasförmigen Brennstoff (F) von einer Brennstoffquelle (12) zu zumindest einem Verteiler (16) und
• mehrere Brennstoffleitungen (20) zum Weiterleiten von Brennstoff (F) von dem Verteiler (16) oder von mehreren Verteilern (16) zu einer Anzahl von Einspritzdüsen (21), mittels denen der Brennstoff (F) in zumindest eine Brennkammer der Gasturbine eindüsbar ist,
wobei in zumindest einer Brennstoffleitung (20) ein Regelventil (24) mit einstellbarer Regelcharakteristik angeordnet ist,
wobei die Regelcharakteristik des betreffenden Regelventils (24) mittels eines über eine Steuerleitung (35) zuführbaren gasförmigen oder flüssigen Steuermediums einstellbar ist,
**dadurch gekennzeichnet, dass**
das Regelventil (24) nach Art eines Rückschlagventils mit einem Eingangsanschluss und einem Ausgangsanschluss ausgebildet ist, welches anstelle oder zusätzlich zur Feder des Rückschlagventils einen Steueranschluss (36) für das Steuermedium aufweist, an dem zum Öffnen des Regelventils (24) ein vom Eingangsdruck zu überwindender Gegendruck anstehbar ist.

2. Brennstoffleitungssystem (10) nach Anspruch 1,
mit mehreren betreffenden Regelventilen (24), deren Steuerleitungen (35) von einer gemeinsamen Steuerzuleitung (40) abzweigen.

3. Brennstoffleitungssystem (10) nach Anspruch 2, bei dem in der Steuerzuleitung (40) ein weiteres Regelventil (42) zur Einstellung des Drucks im Steuermedium vorgesehen ist.

4. Gasturbine mit einem Brennstoffleitungssystem (10) nach einem der Ansprüche 1 bis 3,
bei dem zumindest eine der Einspritzdüsen (21) als zumindest eine Brennerstufe in einem oder mehreren Brennern (22) ausgebildet ist.

5. Gasturbine nach Anspruch 4,
mit mehreren Brennern (22), die jeweils als Einspritzdüsen (21) zumindest eine erste Pilotstufe und eine zweite Pilotstufe umfassen, wobei alle der ersten Pilotstufe zuzuordnenden Einspritzdüsen (21) an das Brennstoffleitungssystem (10) nach einem der Ansprüche 1 bis 3 angeschlossen sind und alle der zweiten Pilotstufe zuzuordnenden Einspritzdüsen (21) unmittelbar mit dem Verteiler (16) verbunden sind.

6. Verfahren zum Betrieb einer Gasturbine mit einem Brennstoffleitungssystem (10) nach einem der Ansprüche 1 bis 3,
bei dem das betreffende Regelventil (24) oder die betreffenden Regelventile (24) in Abhängigkeit von der Gasturbinenleistung eingestellt wird bzw. werden.

7. Verfahren zum Spülen des Brennstoffleitungssystems (10) nach einem der Ansprüche 1, 2 oder 3,
bei dem nach dem Abschalten der Brennstoffförderung durch die betreffenden Abschnitte des Brennstoffleitungssystem (10) ein Spülmedium (S) von einer Spülmediumquelle (28) über zumindest einen in die betreffende Brennstoffleitung (20) mündenden Spülmediumausgang (32) zu den Einspritzdüsen (21) mit einem vergleichsweise geringem Versorgungsdruck gefördert wird, indem ein die Regelcharakteristik des Regelventil (24) ändernder Steuermedium-Gegendruck soweit reduziert wird, dass das Regelventil (24) öffnet.

## Claims

1. Fuel line system (10) for a gas turbine, having:
• at least one fuel supply line (14) for supplying and feeding liquid or gaseous fuel (F) from a fuel source (12) to at least one distributor (16), and
• a plurality of fuel lines (20) for passing on fuel (F) from the distributor (16) or from a plurality of distributors (16) to a number of injection nozzles (21), by means of which the fuel (F) can be injected into at least one combustion chamber of the gas turbine,
wherein a control valve (24) with a variable control characteristic is arranged in at least one fuel line (20),
wherein the control characteristic of the relevant control valve (24) can be adjusted by means of a gaseous or liquid control medium which can be supplied via a control line (35),
**characterized in that**
the control valve (24) is designed in the form of a non-return valve with an input connection and an output connection which, instead of or in addition to the spring of the non-return valve, has a control connection (36) for the control medium, to which a back-pressure, to be overcome by the input pressure, can be applied in order to open the control valve (24).

2. Fuel line system (10) according to Claim 1,
having a plurality of relevant control valves (24) whose control lines (35) are tapped off from a common control supply line (40).

3. Fuel line system (10) according to Claim 2,
in which a further control valve (42) is provided in the control supply line (40), in order to adjust the pressure in the control medium.

4. Gas turbine having a fuel line system (10) according to one of Claims 1 to 3,
in which at least one of the injection nozzles (21) is in the form of at least one burner stage in one or more burners (22).

5. Gas turbine according to Claim 4,
having a plurality of burners (22), which, as injection nozzles (21), each have at least one first pilot stage and one second pilot stage, with all of the injection nozzles (21) which can be associated with the first pilot stage being connected to the fuel line system (10) according to one of Claims 1 to 3, and with all of the injection nozzles (21) which can be associated with the second pilot stage being directly connected to the distributor (16).

6. Method for operation of a gas turbine having a fuel line system (10) according to one of Claims 1 to 3,
in which the relevant control valve (24) or the relevant control valves (24) is or are adjusted as a function of the gas turbine power.

7. Method for purging the fuel line system (10) according to one of Claims 1, 2 or 3,
in which, after the fuel feed has been switched off, a purging medium (S) is fed through the relevant sections of the fuel line system (10) from a purging medium source (28) via at least one purging medium output (32), which opens into the relevant fuel line (20), to the injection nozzles (21) at a comparatively low supply pressure, in that a control medium back-pressure, which varies the control characteristic of the control valve (24), is reduced to such an extent that the control valve (24) opens.

## Revendications

1. Système ( 10 ) de canalisation de combustible pour une turbine à gaz, comprenant
• au moins une arrivée ( 14 ) de combustible pour apporter et véhiculer du combustible ( F ) liquide ou gazeux d'une source ( 12 ) de combustible à au moins un répartiteur ( 16 ) et
• plusieurs conduits ( 20 ) pour du combustible pour acheminer du combustible ( F ) du répartiteur ( 16 ) ou de plusieurs répartiteurs ( 16 ) à un certain nombre de buses ( 21 ) d'injection, au moyen desquelles le combustible ( F ) peut être pulvérisé dans au moins une chambre de combustion de la turbine à gaz,
dans lequel une vanne ( 24 ) de réglage à caractéristique de réglage réglable peut être montée dans au moins un conduit ( 20 ) pour du combustible,
la caractéristique de réglage de la vanne ( 24 ) de réglage concernée pouvant être réglée au moyen d'un fluide de commande gazeux ou liquide pouvant être amené par un conduit ( 35 ) de commande,
**caractérisé en ce que**
la vanne ( 24 ) de réglage est réalisée à la manière d'un clapet antiretour ayant un raccord d'entrée et un raccord de sortie, qui a, au lieu ou en plus du ressort du clapet antiretour, un raccord ( 36 ) de commande, auquel une contrepression à surmonter par la pression d'entrée peut être appliquée pour l'ouverture de la vanne ( 24 ) de réglage.

2. Système ( 10 ) de canalisation de combustible suivant la revendication 1,
comprenant plusieurs vannes ( 24 ) de réglage concernées, dont les conduits ( 35 ) de commande bifurquent d'un conduit ( 40 ) d'amenée de commande commun.

3. Système ( 10 ) de canalisation de combustible suivant la revendication 2, dans lequel, dans le conduit ( 40 ) d'amenée de commande, est prévue une autre vanne ( 42 ) de réglage pour le réglage de la pression du fluide de commande.

4. Turbine à gaz ayant un système ( 10 ) de canalisation de combustible suivant l'une des revendications 1 à 3,
dans laquelle au moins l'une des buses ( 21 ) d'injection est constituée en un ou en plusieurs brûleurs ( 22 ) suivant au moins un étage de brûleur.

5. Turbine à gaz suivant la revendication 4,
comprenant plusieurs brûleurs ( 22 ), qui comprennent respectivement, comme buses ( 21 ) d'injection, au moins un premier étage pilote et un deuxième étage pilote, dans laquelle toutes les buses ( 21 ) d'injection à associer au premier étage pilote sont raccordées au système ( 10 ) de canalisation de combustible suivant l'une des revendications 1 à 3 et toutes les buses ( 21 ) d'injection à associer au deuxième étage pilote sont reliées directement au répartiteur ( 16 ).

6. Procédé pour faire fonctionner une turbine à gaz ayant un système ( 10 ) de canalisation de combustible suivant l'une des revendications 1 à 3,
dans lequel on règle la vanne ( 24 ) de réglage concernée ou les vannes ( 24 ) de réglage concernées en fonction de la puissance de la turbine à gaz.

7. Procédé de balayage du système ( 10 ) de canalisation de combustible suivant l'une des revendications 1, 2 ou 3,
dans lequel, après avoir arrêté de véhiculer du combustible dans les sections concernées du système ( 10 ) de canalisation de combustible, on véhicule un fluide ( S ) de balayage d'une source ( 28 ) de fluide de balayage aux buses ( 21 ) de projection, en passant par au moins une sortie ( 32 ) de fluide de balayage débouchant sur le conduit ( 20 ) pour du combustible concerné à une pression d'alimentation relativement petite, en réduisant une contrepression du fluide de commande modifiant la caractéristique de réglage de la vanne ( 24 ) de réglage de manière à ouvrir la vanne ( 24 ) de réglage.
